Europäisches Patentamt

European Patent Office

Office européen des brevets

(11) Numéro de publication: **0 100 089**
**B1**

(12) **FASCICULE DE BREVET EUROPEEN**

(45) Date de publication du fascicule du brevet: **30.04.86**

(51) Int. Cl.⁴: **H 01 S 3/081,** H 01 S 3/03

(21) Numéro de dépôt: **83107327.5**

(22) Date de dépôt: **26.07.83**

(54) Oscillateur laser à flux gazeux.

(30) Priorité: **30.07.82 FR 8213322**

(43) Date de publication de la demande:
**08.02.84 Bulletin 84/06**

(45) Mention de la délivrance du brevet:
**30.04.86 Bulletin 86/18**

(84) Etats contractants désignés:
**BE CH DE FR GB IT LI NL SE**

(56) Documents cités:
**US-A-4 050 036**
**US-A-4 164 366**

**APPLIED OPTICS, vol. 19, no. 5, 1 mars 1980,
pages 778-789, New York, USA, R.A. CHODZKO
et al.: "Annular (HSURIA) resonators: some
experimental studies including polarization
effects"**

**APPLIED OPTICS, vol. 17, no. 6, 15 mars 1978,
pages 936-943, New York, USA, P.B. MUMOLA
et al.: "Unstable resonators for annular gain
volume lasers"**

(73) Titulaire: **COMPAGNIE GENERALE
D'ELECTRICITE Société anonyme dite:
54, rue La Boétie
F-75382 Paris Cedex 08 (FR)**

(72) Inventeur: **Lavarini, Bernard
18 Parc de Diane
F-78350 Jouy en Josas (FR)**

(74) Mandataire: **Weinmiller, Jürgen et al
Zeppelinstrasse 63
D-8000 München 80 (DE)**

(56) Documents cités:
**APPLIED OPTICS, vol. 16, no. 5, mai 1977,
pages 1192-1196, New York, USA, R.J.
FREIBERG et al.: "Split-mode unstable
resonator"**

**PROCEEDINGS OF THE SOCIETY OF PHOTO-
OPTICAL INSTRUMENTATION ENGINEERS,
29-31 juillet 1980, San Diego, California, vol.
251, pages 131-135, R.N. SHAGAM et al.,
Bellingham, Washington, USA, D.M. SWAIN:
"Centration of a linear cone to the optical axis
of a reflaxicon"**

Courier Press, Leamington Spa, England.

EP 0 100 089 B1

## Description

La présente invention concerne un oscillateur laser à flux gazeux du type comportant
— une enceinte allongée suivant un axe,
— un premier réflecteur disposé à une extrémité de l'enceinte,
— un deuxième réflecteur disposé à l'intérieur de l'enceinte en regard du premier réflecteur, les bords de ce deuxième réflecteur étant fixés de manière étanche sur les parois de l'enceinte de façon à former dans celle-ci une première chambre entre les premier et deuxième réflecteurs et une deuxième chambre entre le deuxième réflecteur et l'autre extrémité de l'enceinte, le deuxième réflecteur comportant une ouverture mettant en communication les première et deuxième chambres,
— des moyens pour introduire un gaz actif laser dans la deuxième chambre, le gaz traversant l'ouverture du deuxième réflecteur, la section de cette ouverture et la pression de gaz étant choisies pour former un écoulement tourbillonnaire dans la première chambre,
— des moyens pour faire sortir le gaz de la première chambre
— et deux électrodes disposées dans la première chambre et connectées à une source de courant électrique pour établir une décharge électrique dans le gaz actif, de façon à créer un rayonnement lumineux se réfléchissant sur les premier et deuxième réflecteurs.

Dans un oscillateur connu de ce type décrit dans le document FR—A 2.243.538, la cavité optique résonnante est formée par les premier et deuxième réflecteurs. Le faisceau laser de sortie passe dans l'ouverture du deuxième réflecteur et sort de l'enceinte en traversant une fenêtre transparente ménagée dans la paroi de la deuxième chambre. Mais le rayonnement lumineux oscillant dans la cavité ne traverse pas une portion importante de la zone cylindrique axiale de la première chambre dont la section correspond à l'ouverture du deuxième réflecteur: il en résulte une perte de puissance de sortie appréciable.

Pour remédier à cet inconvénient, on a proposé d'utiliser une cavité dite "multipassage" comportant une pluralité de réflecteurs (par exemple 14) répartis en deux groupes. Un rayonnement oscillant s'établit entre ces réflecteurs suivant un faisceau en ligne brisée traversant la quasi totalité du volume interne de la première chambre. Mais cette disposition entraîne des pertes lumineuses importantes par réflexion sur les nombreux miroirs de la cavité: l'augmentation de puissance de sortie est donc beaucoup moins importante que celle attendue.

La présente invention a pour but d'apporter un perfectionnement à l'oscillateur laser connu par le document FR—A 2.243.538 pour augmenter sa puissance de sortie de façon très appréciable.

Elle a pour objet un oscillateur laser à flux gazeux du type spécifié plus haut caractérisé en ce que
— le premier réflecteur comporte, du centre à la périphérie, successivement une première et une deuxième surfaces réfléchissantes sensiblement coniques, celles-ci étant coaxiales suivant ledit axe et inclinées par rapport au plan normal à l'axe, en sens inverse l'une de l'autre, le deuxième réflecteur étant plan et centré sur l'axe, ladite ouverture étant axiale, de manière qu'un premier faisceau annulaire du rayonnement lumineux, provenant du deuxième réflecteur, soit réfléchi successivement sur la deuxième et la première surfaces coniques afin de former autour de l'axe un deuxième faisceau cylindrique occupant sensiblement tout le volume axial laissé libre par le premier faisceau annulaire, le deuxième faisceau pénétrant dans la deuxième chambre à travers l'ouverture du deuxième réflecteur
— et qu'il comporte
. un troisième réflecteur convexe centré sur l'axe et disposé dans la deuxième chambre de façon à réflechir le deuxième faisceau cylindrique suivant un troisième faisceau divergent coaxial
. et une quatrième réflecteur plan disposé sur l'axe entre les deuxième et troisième réflecteurs, ce réflecteur étant muni d'une percée centrale et étant incliné par rapport au plan normal à l'axe de façon d'une part que le deuxième faisceau et une partie axiale du troisième faisceau traverse la percée et d'autre part que la partie périphérique restante du troisième faisceau soit réfléchie par le quatrième réflecteur suivant un quatrième faisceau,
les premier, deuxième, troisième et quatrième réflecteurs constituant une cavité résonnante instable capable d'amplifier le rayonnement lumineux de façon à créer l'effet laser, le quatrième faisceau constituant le rayonnement laser, ladite enceinte comportant des moyens pour laisser sortir le rayonnement laser.

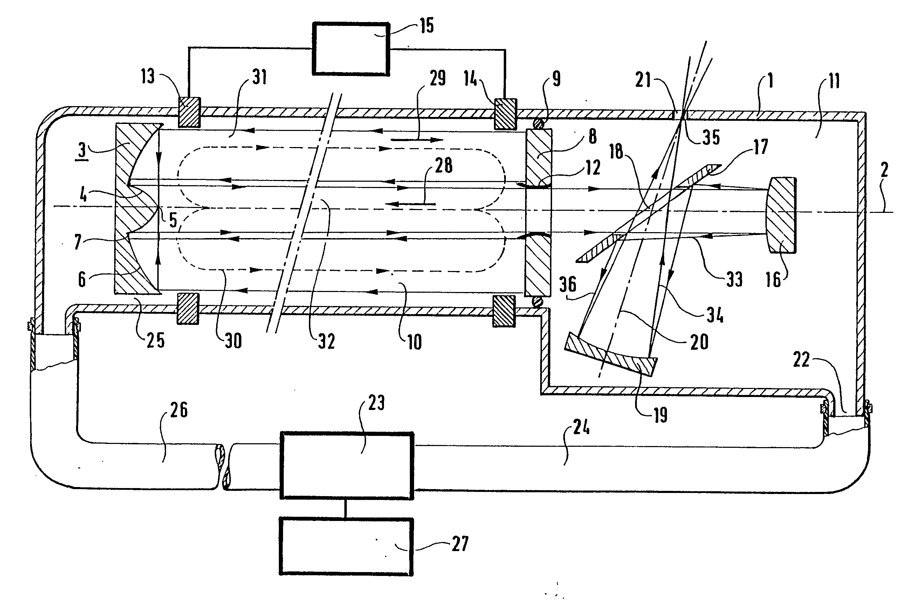

Des formes particulières d'exécution de l'objet de la présente invention sont décrites ci-dessous, à titre d'exemple, en référence au dessin annexé dans lequel la figure unique représente un mode de réalisation de l'oscillateur laser selon l'invention.

Sur cette figure est visible une enceinte 1 de forme générale cylindrique suivant un axe 2. Au voisinage d'une extrémité de l'enceinte est disposé un miroir 3, de type appelé AXICON. Ce miroir comporte dans sa partie centrale une surface réfléchissante 4 sensiblement conique de sommet 5 et dans a partie périphérique une surface réfléchissante sensiblement tronconique 6. Ces surfaces 5 et 6 sont de révolution autour de l'axe 2, se raccordent entre elles suivant une cercle 7 et sont inclinées, par rapport au plan normal à l'axe 2, en sens inverse l'une de l'autre, de façon à présenter un profil en W ainsi qu'il est visible sur la figure.

A l'intérieur de l'enceinte 1 est disposé un miroir plan 8 centré sur l'axe 2 et en regard du miroir 3. Les bords du miroir 8 sont fixés à l'aide d'un joint torique 9 sur la paroi interne de l'enceinte 1, de manière à former dans l'enceinte, entre les miroirs 3 et 8, une chambre 10, le reste du volume de l'enceinte constituant une chambre 11. Le miroir 8 a la forme d'un anneau et une tuyère 12 est fixée suivant l'axe 2 sur la surface cylindrique interne de l'anneau. Le diamètre du col de la tuyère 12 est sensiblement égal au diamètre du cercle 7.

A l'intérieur de la chambre 10 sont disposées deux électrodes annulaires 13 et 14, au voisinage respectivement des miroirs 3 et 8. Les deux bornes d'une source électrique 15 à haute tension continue sont reliées respectivement aux électrodes 13 et 14.

A l'intérieur de la chambre 11 est disposé un miroir convexe 16 centré sur l'axe 2. La surface réfléchissante du miroir 16 est tournée vers le miroir 3. Un miroir 17 comportant une percée centrale 18 est disposé entre les miroirs 8 et 16, incliné sur l'axe 2. A l'intérieur de la chambre 11 est disposé un miroir concave 19 centré sur un axe transversal 20 passant à travers la percée 18. La paroi de l'enceinte entourant la chambre 11 comporte un orifice 21 disposé sur l'axe 20.

La chambre 11 comporte une ouverture 22 reliée à la sortie d'un compresseur 23 par une gaine 24. La chambre 10 comporte des ouvertures 25 situées entre les bords du miroir 3 et la paroi de l'enceinte 1. Les ouvertures 25 sont reliées à l'entrée du compresseur 23 par des gaines 26. Le compresseur 23 est relié à un réservoir de gaz 27.

L'oscillateur laser décrit ci-dessus et représenté sur la figure fonctionne de la manière suivante.

On met en marche le compresseur 23 pour introduire dans la chambre 11 un mélange de gaz carbonique, d'azote et d'hélium provenant de réservoir 27. Ce gaz pénètre dans la chambre 10 à travers la tuyère 12.

De préférence, l'admission du mélange gazeux est réglée de façon que la pression dans la chambre 11 s'établisse un peu au dessus de la pression atmosphérique ambiante. Par exemple, la pression ambiante étant de 1013 millibars, la pression dans la chambre 11 et de 1028 millibars. La tuyère 12 provoque une dépression gazeuse dans la chambre 10 soumise à l'aspiration du compresseur 23 à travers les ouvertures 25. La pression dans la chambre 10 peut s'établir à 130 millibars environ.

La section des ouvertures de sortie de la chambre 10, la section du col de la tuyère 12, la pression du mélange gazeux dans la chambre 11, le diamètre de la chambre 10 et la distance entre les réflecteurs 3 et 8 sont choisis de manière que le flux gazeux, qui s'établit dans le sens de la flèche 28 dans la zone axiale de la chambre 10 à la sortie de la tuyère 12, soit déplacé vers les parois latérales de la chambre 10 lorsqu'il arrive devant le réflecteur 3, et s'écoule ensuite dans le sens de la flèche 29 au voisinage des parois de la chambre 10, de façon à créer un écoulement tourbillonnaire 30.

On met en marche la source 15, ce qui provoque dans la chambre 10 entre les électrodes 13 et 14, une décharge électrique particulièrement stable et homogène dans le gaz actif soumis à l'écoulement tourbillonnaire 30.

Les réflecteurs 8, 3, 16 et 17 constituent une cavité optique résonnante instable dans laquelle s'établit un rayonnement lumineux oscillatoire. Ce rayonnement comprend un faisceau cylindrique annulaire 31 renvoyé sur lui-même par la miroir 8 et réfléchi successivement sur les surfaces 6 et 4 du miroir 3 pour former un faisceau cylindrique axial 32 paralléle au faisceau 31 et en sens inverse.

Les génératrices des surfaces de révolution sensiblement coniques 4 et 6 du miroir 3 ne sont pas en pratique des segments de droite, mais sont constituées par des courbes quasi rectilignes dont le profil est déterminé de façon que le faisceau 32 soit rigoureusement parallèle au faisceau 31. La réalisation pratique de ces profils non linéaires exige en pratique un usinage du réflecteur 3 à l'aide d'un outil en diamant.

Comme le diamètre du col de la tuyère 12 est sensiblement égal au diamètre du cercle 7 constituant la jonction entre les surfaces 4 et 6 du miroi 3, le faisceau 32 passe juste à travers le col de la tuyère 12 pour être réfléchi par le miroir 16. De plus, ce faisceau 32 occupe sensiblement tout le volume axial de la chambre 10 laissé libre par le faisceau annulaire 31.

La percée 18 du miroir 17 est réalisée de façon à laisser juste passer le faisceau 32. Le miroir convexe 16 réflechit le faisceau 32 suivant un faisceau légèrement divergent 33. La face du miroir 17 tournée vers le miroir 16 réflechit donc une partie périphérique du faisceau 33, cette partie 36 constituant le faisceau laser de sortie. Dans le mode de réalisation représente sur la figure, le faisceau 36 est renvoyé en sens inverse par le miroir concave 19 pour former un faisceau 34 qui traverse l'ouverture 18 du miroir 17 et converge en un point 35 situé dans l'orifice 21 de la paroi de l'enceinte 1. Cet orifice dont le diamètre peut être de l'ordre de 3 millimètres permet à l'énergie laser de sortie de l'enceinte.

Comme les faisceaux 31 et 32 occupent, sans se recouper, sensiblement tout le volume utile de la chambre à décharge 10, l'énergie laser de sortie est sensiblement augmentée par rapport à celle délivrée par l'oscillateur laser connu cité plus haut. D'autre part, la cavité instable du laser selon l'invention fonctionné à l'aide d'un nombre relativement faible de miroirs, ce qui permet de diminuer de façon importante les pertes d'energie résultant de l'utilisation de cavités multipassage. La stabilité angulaire de faisceau délivré par l'oscillateur selon l'invention est plus facile à réaliser que dans les lasers utilisant ces cavités multipassage. La cavité instable permet d'obtenir un faisceau de sortie monomode, ce qui présente des avantages dans certaines applications. Enfin la sortie du faisceau laser par un orifice de l'enceinte permet de supprimer les pertes par réflexion et absorption dans la fenêtre transparente généralement utilisée dans l'art antérieur. Ce résultat est obtenu au prix d'une perte de gaz qui peut être très faible si la pression gazeuse dans l'enceinte au voisinage de cet orifice est à peine supérieur à la pression atmosphérique ambiante.

L'oscillateur laser selon la présente invention peut être utilisé, pour réaliser des laser industriels, par exemple des lasers d'usinage.

**Revendications**

1. Oscillateur laser à flux gazeux, comportant
— une enceinte allongé (1) suivant un axe (2).
— un premier réflecteur (3) disposé à une extrémité de l'enceinte,
— un deuxième réflecteur (8) disposé à l'intérieur de l'enceinte en regard du premier réflecteur, les bords de ce deuxième réflecteur étant fixés de manière étanche sur les parois de l'enceinte de façon à former dans celle-ci une première chambre (10) entre les premier et deuxième réflecteurs et une deuxième chambre (11) entre le deuxième réflecteur et l'autre extrémité de l'enceinte, le deuxième réflecteur comportant une ouverture mettant en communication les première et deuxième chambres,
— des moyens (27, 23, 24) pour introduire un gaz actif laser dans la deuxième chambre (11), le gaz traversant l'ouverture du deuxième réflecteur (8), la section de cette ouverture et la pression de gaz étant choisies pour former un écoulement tourbillonnaire (30) dans la première chambre,
— des moyens (23, 26, 25) pour faire sortir le gaz de la première chambre (10)
— et deux électrodes (13, 14) disposées dans la première chambre et connectées à une source de courant électrique (15) pour établir une décharge électrique dans le gaz actif, de façon à créer un rayonnement lumineux se réfléchissant sur les premier et deuxième réflecteurs, caractérisé en ce que
— le premier réflecteur (3) comporte, du centre à la périphérie, successivement une première (4) et une deuxième (6) surfaces réfléchissantes sensiblement coniques, celles-ci étant coaxiales suivant ledit axe (2) et inclinées par rapport au plan normal à l'axe, en sens inverse l'une de l'autre, le deuxième réflecteur (8) étant plan et centré sur l'axe, ladite ouverture étant axiale, de manière qu'un premier faisceau annulaire (31) du rayonnement lumineux, provenant du deuxième réflecteur (8), soit réfléchi successivement sur la deuxième (6) et la première (4) surfaces coniques afin de former autour de l'axe un deuxième faisceau cylindrique (32) occupant sensiblement tout le volume axial laissé libre par la premier faisceau annulaire (31), le deuxième faisceau pénétrant dans la deuxième chambre (11) à travers l'ouverture du deuxième réflecteur (8)
— et qu'il comporte
. un troisième réflecteur convexe (16) centré sur l'axe (2) et disposé dans la deuxième chambre (11) de façon à réflechir le deuxième faisceau cylindrique (32) suivant un troisième faisceau (33) divergent coaxial
. et un quatrième réflecteur plan (17) disposé sur l'axe (2) entre les deuxième (8) et troisième (16) réflecteurs, ce réflecteur (17) étant muni d'une percée centrale (18) et étant incliné par rapport au plan normal à l'axe de façon d'une part que le deuxième faisceau (32) et une partie axiale du troisième faisceau (33) traverse la percée (18) et d'autre part que la partie périphérique restante du troisième faisceau (33) soit réflechié par le quatrième réflecteur suivant un quatrième faisceau (36),
les premier, deuxième, troisième et quatrième réflecteurs (3, 8, 16, 17) constituant une cavité résonnante instable capable d'amplifier le rayonnement lumineux de façon à créer l'effet laser, le quatrième faisceau (36) constituant le rayonnement laser, ladite enceinte (1) comportant des moyens (21) pour laisser sortir le rayonnement laser.

2. Oscillateur selon la revendication 1, caractérisé en ce qu'il comporte un cinquième réflecteur (19) concave disposé pour concentrer en un point (35) l'énergie du rayonnement laser (36) suivant un cinquième faisceau (34).

3. Oscillateur selon la revendication 2, caractérisé en ce que lesdits moyens pour laisser sortir le rayonnement laser comportent un orifice (21) ménagé dans la paroi de l'enceinte entourant le deuxième chambre, le point de concentration (35) de l'énergie du rayonnement laser étant disposée dans cet orifice, lesdits moyens pour introduire le gaz actif dans la deuxième chambre (11) étant capables de maintenir dans cette chambre une pression de gaz actif légèrement supérieure à la pression gazeuse à l'extérieur de l'enceinte, au voisinage de l'orifice (21).

4. Oscillateur selon la revendication 2, caractérisé en ce que le cinquième réflecteur (19) est disposé de façon que le cinquième faisceau (34) traverse la percée (18) du quatrième réflecteur (17), celui-ci étant situé entre le cinquième réflecteur (19) et le point de concentration (35).

5. Oscillateur selon la revendication 1, caractérisé en ce qu'il comporte une tuyère (12) traversant le deuxième réflecteur (8) pour créer une dépression gazeuse dans la première chambre (11), ladite ouverture axiale étant constituée par le col de la tuyère.

6. Oscillateur selon la revendication 1, caractérisé en ce que lesdits moyens pour introduire le gaz actif dans la deuxième chambre et pour faire sortir le gaz de la première chambre comportent un compresseur (23) dont l'entrée est reliée à la première chambre (10) et la sortie à la deuxième chambre (11).

7. Oscillateur selon la revendication 1, caractérisé en ce que le gaz actif laser est un mélange d'azote, de gaz carbonique et d'hélium.

**Patentansprüche**

1. Laseroszillator. mit Gasfluß, mit
— einem länglichen Behälter (1) mit Längsachse (2),
— einem ersten Reflektor (3), der an einem Ende des Behälters angeordnet ist,
— einen zweiten Reflektor (8), der im Inneren des Behälters gegenüber dem ersten Reflektor angeordnet ist, wobei die Ränder dieses zweiten Reflektors dicht an den Wänden des Behälters befestigt sind und so in diesem eine erste Kammer (10) zwischen dem ersten und dem zweiten Reflektor und eine zweite Kammer (11) zwischen dem zweiten Reflektor und dem anderen Ende des Behälters bilden, und wobei der zweite Reflektor eine Öffnung aufweist, die die erste und die zweite Kammer miteinander verbindet,

— Mitteln (27, 23, 24), um ein aktives Lasergas in die zweite Kammer (11) einzuführen, das die Öffnung des zweiten Reflektors (8) durchquert, wobei der Querschnitt dieser Öffnung und der Gasdruck so gewählt sind, daß sich eine Wirkelströmung (30) in der ersten Kammer ausbildet,

— Mitteln (23, 26, 25), um das Gas aus der ersten Kammer (10) zu entfernen,

— und zwei Elektroden (13, 14), die in der ersten Kammer angeordnet und an eine elektrische Stromquelle (15) angeschlossen sind, um eine elektrische Entladung in dem aktiven Gas herzustellen und so eine Lichtstrahlung zu erzeugen, die am ersten und am zweiten Reflektor reflektiert wird, dadurch gekennzeichnet, daß

— der erste Reflektor (3) vom Zentrum zur Peripherie hin aufeinanderfolgend eine erste (4) und eine zweite im wesentlichen konische reflektierende Oberfläche (6) aufweist, wobei diese koaxial gemäß der Achse (2) und in bezug auf die Lotebene zur Achse einander entgegengesetzt geneigt sind und wobei der zweite Reflektor (8) eben und auf die Achse zentriert ist und die Öffnung axial ist, so daß eine erste ringförmiges Bündel (31) der Lichtstrahlung, das vom zweiten Reflektor (8) kommt, hintereinander auf die zweite (6) und die erste konische Oberfläche (4) reflektiert wird, um so um die Achse ein zweites, zylindrisches Bündel (32) zu bilden, das im wesentlichen das ganze vom ersten ringförmigen Bündel (31) freigelassene axiale Volumen einnimmt, wobei das zweite Bündel durch die Öffnung im zweiten Reflektor (8) in die zweite Kammer (11) eindringt,

— und daß et aufweist,

. einen dritten konvexen Reflektor (16), der auf die Achse (2) zentriert und so in der zweiten Kammer (11) angeordnet ist, daß er das zweite zylindrische Bündel (32) gemäß einem dritten divergenten und koaxialen Bündel (33) reflektiert,

. und einen vierten ebenen Reflektor (17), der auf der Achse (2) zwischen dem zweiten (8) und dem dritten Reflektor (16) angeordnet ist und eine zentrale Öffnung (18) aufweist und in bezug auf die Lotebene zur Achse so geneigt ist, daß einerseits das zweite Bündel (32) und ein axialer Teil des dritten Bündels (33) die Öffnung (18) durchquert und andererseits der verbleibende periphere Teil des dritten Bündels (33) von vierten Reflektor gemäß einem vierten Bündel (36) reflektiert wird,

wobei der erste, zweite, dritte und vierte Reflektor (3, 8, 16, 17) einen instabilen Resonanzhohlraum bilden, der die Lichtstrahlung so verstärken kann, daß der Lasereffekt entsteht, und wobei das vierte Bündel (36) die Laserstrahlung bildet und der Behälter (1) Mittel (21) aufweist, um die Laserstrahlung austreten zu lassen.

2. Oszillator nach Anspruch 1, dadurch gekennzeichnet, daß er einen fünften, konkaven Reflektor (19) aufweist, der so angeordnet ist, daß et in einem Punkt (35) die Energie der Laserstrahlung (36) gemäß einem fünften Bündel (34) konzentriert.

3. Oszillator nach Anspruch 2, dadurch gekennzeichnet, daß die Mittel zum Austretenlassen der Laserstrahlung eine Öffnung (21) in der die zweite Kammer umgebenden Wand des Behälters aufweisen, wobei der Konzentrationspunkt (35) der Energie des Laserstrahlung in dieser Öffnung angeordnet ist und wobei die Mittel zum Einführen des aktiven Gases in die zweite Kammer (11) in dieser Kammer einen Druck des aktiven Gases aufrechterhalten können, der geringfügig höher als der Gasdruck außerhalb des Behälters in der Nähe der Öffnung (21) ist.

4. Oszillator nach Anspruch 2, dadurch gekennzeichnet, daß der fünfte Reflektor (19) so angeordnet ist, daß das fünfte Bündel (34) die Öffnung (18) des vierten Reflektors (17) durchquert, wobei dieser zwischen dem fünften reflektor (19) und dem Konzentrationspunkt (35) angeordnet ist.

5. Oszillator nach Anspruch 1, dadurch gekennzeichnet, daß er einen Durchlaß (12) aufweist, der den zweiten Reflektor (8) durchquert, um einen Gasunterdruck in der ersten Kammer (11) zu erzeugen, wobei die axiale Öffnung von der Engstelle dieses Durchlasses gebildet wird.

6. Oszillator nach Anspruch 1, dadurch gekennzeichnet, daß die Mittel zum Einführen des aktiven Gases in die zweite Kammer und zum Ausleiten des Gases aus der ersten Kammer einen Kompressor (23) aufweisen, dessen Eingang mit der ersten Kammer (10) und dessen Ausgang mit der zweiten Kammer (11) verbunden ist.

7. Oszillator nach Anspruch 1, dadurch gekennzeichnet, daß das aktive Lasergas eine Mischung aus Stickstoff, Kohlensäuregas und Helium ist.

**Claims**

1. A gas flow laser oscillator comprising
— an elongated enclosure (1) with an axis (2),
— a first reflector (3) disposed at one end of the enclosure,
— a second reflector (8) disposed inside the enclosure facing the first reflector, the edges of this second reflector being fixed in a sealed manner to the walls of the enclosure to define therein a first chamber (10) between the first and the second reflectors and a second chamber (11) between the second reflector and the other end of the enclosure, the second reflector including an opening putting the first and second chambers into communication with each other,
— means (27, 23, 24) for inserting a laser active gas into the second chamber (11), the gas passing through the opening in the second reflector (8), the cross section of the opening and the pressure of the gas being chosen to form a turbulent flow (30) in the first chamber,
— means (23, 26, 25) for removing the gas from the first chamber (10),

— and two electrodes (13, 14) disposed in the first chamber and connected to a source of electric current (15) for establishing an electric discharge in the active gas in such a manner as to create a light radiation which is reflected on the first and second reflectors,

characterized in that

— the first reflector (3) comprises, from the center to the periphery, successively first (4) and second (6) substantially conical reflecting surfaces, said surfaces being coaxial with said axis (2) and oppositely inclined relative to a plane normal to the axis, the second reflector (8) being plane and centered on the axis, said opening being axial in such a manner that an annular first beam (31) of the light radiation coming from the second reflector (8) is reflected in succession on the second (6) and first conical surfaces (4) so as to constitute a second cylindrical beam (32) about said axis, which beam occupies substantially all the axial volume left free by the annular first beam (31), the second beam penetrating into the second chamber (11) via the opening in the second reflector (8),

— and that it comprises

. a convex third reflector (16) centered on the axis (2) and disposed in the second chamber (11) in such a manner as to reflect the cylindrical second beam (32) along a divergent coaxial third beam (33),

. and a plane fourth reflector (17) disposed on the axis (2) between the second (8) and third reflectors (16) and being provided with a central aperture (18) and being inclined relative to a plane normal to the axis so that on the one hand the second beam (32) and an axial portion of the third beam (33) pass through the aperture (18), and on the other hand the remaining peripheral portion of the third beam (31) is reflected by the fourth reflector along a fourth beam (36), the first, second, third and fourth reflectors (3, 8, 16, 17) constituting an unstable resonant cavity capable of amplifying light radiation so as to create the laser effect, the fourth beam (36) constituting the laser radiation, said enclosure (1) including means (21) for allowing the laser radiation to escape.

2. An oscillator according to claim 1, characterised in that a concave fifth reflector (19) is disposed so as to concentrate the energy of the laser radiation (36) along a fifth beam (34) onto a point (35).

3. An oscillator according to claim 2, characterized in that said means for allowing the laser radiation to escape comprise an orifice (21) through the wall of the enclosure surrounding the second chamber, the point (35) at which the laser energy is concentrated being disposed in said orifice, said means for inserting the active gas into the second chamber (11) being capable of maintaining said chamber at an active gas pressure which is slightly above the gas pressure outside the enclosure in the vicinity of said orifice (21).

4. An oscillator according to claim 2, characterized in that the fifth reflector (19) is disposed in such a manner that the fifth beam (34) passes through the aperture (18) of the fourth reflector (17), the latter being situated between the fifth reflector (19) and the concentration point (35).

5. An oscillator according to claim 1, characterized in that it comprises a nozzle (12) passing through the second reflector (8) to create a reduced gas pressure in the first chamber (11), said axial opening being constituted by the throat of the nozzle.

6. An oscillator according to claim 1, characterized in that said means for inserting the active gas into the second chamber and for removing it from the first chamber comprise a compressor (23) having an inlet connected to the first chamber (10) and an outlet connected to the second chamber (11).

7. An oscillator according to claim 1, characterized in that the laser active gas is a mixture of nitrogen, carbon gas, and helium.